**Europäisches Patentamt**

**European Patent Office**

**Office européen des brevets**

(11) Veröffentlichungsnummer: **0 294 310**
**A1**

# (12) EUROPÄISCHE PATENTANMELDUNG

(21) Anmeldenummer: **88710009.7**

(22) Anmeldetag: **02.05.88**

(51) Int. Cl.⁴: **F 16 L 59/14**
**F 16 L 59/12**

(30) Priorität: **02.05.87 DE 8706327**

(43) Veröffentlichungstag der Anmeldung:
**07.12.88 Patentblatt 88/49**

(84) Benannte Vertragsstaaten:
**AT BE CH DE ES FR GB GR IT LI LU NL SE**

(71) Anmelder: **Röro Gesellschaft für Isolier-und**
**Fernheiztechnik mbH**
**Am Märzrasen**
**D-6405 Eichenzell 2 (DE)**

(72) Erfinder: **Funke, Klaus, Dipl.-Ing.**
**Steidlstrasse 78**
**D-6400 Fulda (DE)**

(74) Vertreter: **Missling, Arne, Dipl.-Ing.**
**Patentanwalt Bismarckstrasse 43**
**D-6300 Giessen (DE)**

(54) **Wärmeleitungsrohr.**

(57) Es wird ein Wärmeleitungsrohr vorgeschlagen mit einer Isolierung aus geschliffenen und angepaßten Basaltfasern, (4) die das Kupferrohr (2) umgeben. Die Isolierung ist von einem gewellten, flexiblen Außenmantel (3) aus Polyethylen hoher Dichte umgeben. Die Einrichtungen, die zwischen dem Kupferrohr (2) und dem Außenmantel (3) beidseitig angebracht sind, wie auch die Endzentrierscheiben bestehen aus durch Polyurethan einschäumbaren Ringen (5), die das Wärmeleitungsrohr (1) seitlich gegen eingreifende Medien abdichten und das Wärmeleitungsrohr (1) zentral in Position halten, wobei die Stirnflächen (6) der Ringe (5) einen Anstrich (7) gegen Feuchtigkeit aufweisen.

FIG.1

EP 0 294 310 A1

Bundesdruckerei Berlin

**Beschreibung**

Die Erfindung betrifft ein Wärmeleitungsrohr gemäß dem Oberbegriff des Anspruchs 1.

Ein Wärmeleitungsrohr der eingangs genannten Art ist bereits bekannt. Es weist ein Rohr aus weichgeglühtem Kupfer auf, welches an sich eine sehr gute Korrosionsbeständigkeit und eine lange Haltbarkeit hat, sofern der Zutritt von angreifenden Medien, beispielsweise von strömendem Wasser mit freiem Sauerstoff, von diesem ferngehalten wird. Dies wird mit einer alterungsbeständigen, wasserabweisenden Isolierung aus Glaswolle um das Kupferrohr, ferner mit einem dem Erdboden sich anpassenden, gewellten und flexiblen Außenmantel aus korrosionsbeständigem Polyethylen hoher Dichte und fast unbegrenzt langer Haltbarkeit und mit wasserdichten, jedoch teuren Endschutzkappen erreicht, die zwischen dem Kupferrohr und Außenmantel beidseitig angebracht sind und die die Gesamtleitung in viele wasserdichte Wärmeleitungsrohr-Sektoren aufteilen. An den Enden des Wärmeleitungsrohrs angebrachte Endzentrierscheiben halten es in der erforderlichen zentralen Position fest. Auch diese sind materialaufwendig und dementsprechend kostenaufwendig. Aus diesen Merkmalen wird somit deutlich, daß das bekannte Wärmeleitungsrhor fertigungstechnisch aufwendig und daher teuer in seiner Herstellung ist.

Der Erfindung liegt daher die Aufgabe zugrunde, ein Wärmeleitungsrohr der oben genannten Art vorzuschlagen, das neben einer hohen Korrosionsbeständigkeit und langen Haltbarkeit konstruktiv einfacher und damit billiger herstellbar sein soll.

Diese Aufgabe wird mit den Merkmalen des kennzeichnenden Teils des Anspruchs 1 gelöst.

Weitere Ausgestaltungen der Erfindung ergeben sich aus den Unteransprüchen 2 bis 5.

Die mit der Erfindung erzielten Vorteile bestehen im wesentlichen darin, daß die bekannten teuren Endschutzkappen, also die Einrichtungen, die zwischen dem Kupferrohr und dem Außenmantel beidseitig angebracht sind und welche die Isolierung trocken halten und Wärmeleitungsrohr-Sektoren bilden, sowie die bekannten, fertigungstechnisch aufwendig herstellbaren Endzentrierscheiben, die das Wärmeleitungsrohr gegen das Eindringen von angreifenden Medien, beispielsweise gegen strömendes Wasser mit freiem Sauerstoff, abdichten und das Wärmeleitungsrohr zentral in Position halten, entfallen, und durch leicht an den Enden des Wärmeleitungsrohrs aus Polyurethan einschäumbaren billiger herstellbaren Ringen ersetzbar sind, die das Wärmeleitungsrohr, wie zuvor, seitlich gegen das Eindringen von angreifenden Medien abdichten und zentral in Position halten.

Dadurch, daß Stirnflächen des Wärmeleitungsleitungsrohrs erfindungsgemäß noch einen Spezialanstrich erhalten, werden sie, insbesondere die aus Polyurethan einschäumbaren Ringe, zusätzlich gegen das Eindringen von Feuchtigkeit geschützt. Insgesamt ergibt sich also, daß das so hergestellte Wärmeleitungsrohr neben den zuvor angegebenen Vorteilen auch fertigungstechnisch weniger aufwendig und dementsprechend kostengünstiger als das bekannte Wärmeleitungsrohr herstellbar ist.

Ausführungsbeispiele der Erfindung sind in der Zeichnung dargestellt und werden im folgenden näher beschrieben. Es zeigen

Fig. 1 eine teilweise geschnittene und schematische Seitenansicht des erfindungsgemäßen Wärmeleitungsrohrs und

Fig. 2 eine teilweise geschnittene Vorderansicht des erfindungsgemäßen Wärmeleitungsrohrs.

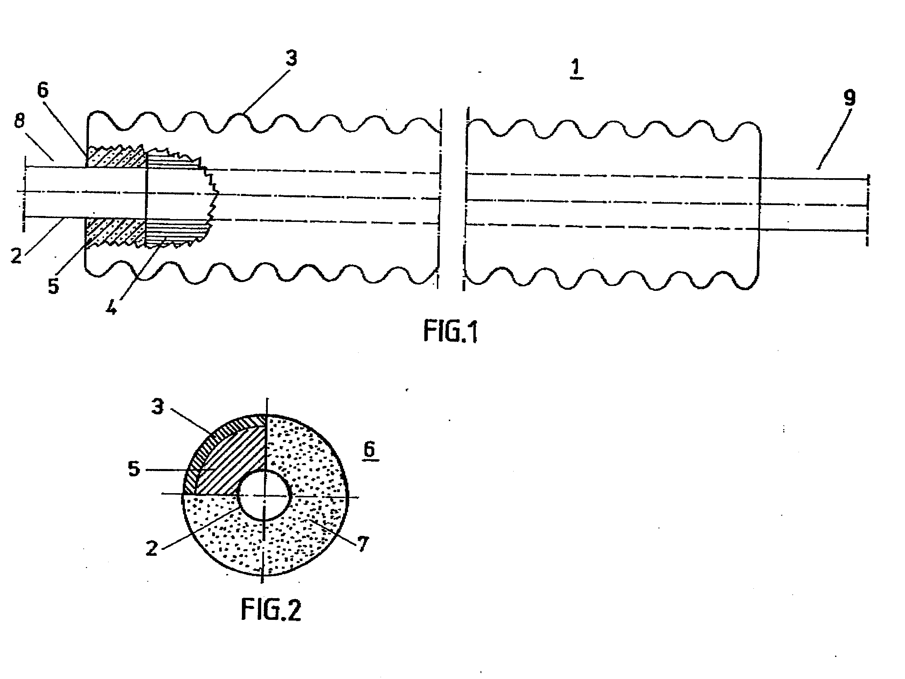

Fig. 1 zeigt in einer teilweise geschnittenen und schematischen Seitenansicht das erfindungsgemäße Wärmeleitungsrohr 1 mit dem zentral angeordneten Kupferrohr 2, das aus weichgeglühtem Kupfer besteht. Kupfer, ein an sich teueres Metall, wird deshalb verwendet, weil es eine hohe Korrosionsbeständigkeit hat und nur dann korrodiert, wenn es angreifenden Medien, beispielsweise strömendem Wasser mit freiem Sauerstoff, ausgesetzt ist. Deshalb muß das Wärmeleitungsrohr 1 gegen diese Medien geschützt sein. Dies erfolgt zum einen durch geschliffene und eingepaßte Basaltfasern 4, die um das Kupferrohr 2 in Längsrichtung angeordnet sind und zum anderen durch einen flexiblen Außenmantel 3, der aus korrosionsbeständigem Polyethylen hoher Dichte besteht und gewellt ist, so daß er sich leicht den Bodenverhältnissen anpassen kann. Polyethylen kann wegen seiner hohen Haltbarkeit für unbegrenzt lange Zeit im Erdboden gelagert werden.

Die erfindungsgemäße Isolierung um das Kupferrohr 2 bewirkt niedrige Wärmeverluste, hält Temperaturen bis zu etwa 523 K (250°C) stand und ist sowohl alterungsbeständig als auch wasserabweisend. Die aus den geschliffenen und eingepaßten Basaltfasern 4 bestehende Isolierung ist dabei so bemessen, daß eine optimale Isolierung im Bereich von Betriebstemperaturen gewährleistet ist. Bei 50°C beträgt der $\lambda$-Wert der Isolierung mindestens 0,035 W/mK (0,028 kcal/mh°C). Im übrigen entspricht die aus den Basaltfasern 4 bestehende Isolierung der Anforderung nach DIN 18165.

Die bekannten Einrichtungen, die zwischen dem eigentlichen Kupferrohr 2 und dem Außenmantel 3 beidseitig angebracht sind, um die Isolierung sowohl während der Lagerung als auch während der Montage trocken zu halten und die Gesamtleitung in viele wasserdichte Wärmeleitungsrohr-Sektoren aufzuteilen, wie auch die bekannten Endzentrierscheiben, die das Kupferohr 2 zentral in Position halten, entfallen und sind erfindungsgemäß durch Ringe 5 ersetzt, die durch Einschäumen von Polyurethan um die Enden des Kupferrohres 2 im Wärmeleitungsrohr 1 gebildet sind und die das gesamte Wärmeleitungsrohr 1 seitlich gegen angreifende Medien, beispielsweise gegen strömendes Wasser mit freiem Sauerstoff, abdichten und zentral in Position halten. Der Polyurethanschaum ist flexibel und führt daher zu keiner Beschädigung der eingepaßten Basaltfasern 4 und ist bis 423 K (150°C) beständig, so daß er allen infrage kommenden Betriebstemperaturen gerecht wird. Stirnflächen 6 des Wärmeleitungsrohrs haben zum Schutz gegen Feuchtigkeit außerdem einen korrosionsbeständigen und haltbaren Spezialanstrich.

Einer Ausführungsform der Erfindung zufolge haben sie durch Ausschäumen mit Polyurethan gebildeten Ringe zum Abdichten gegen Wasser und zum Zentrieren des Kupferrohrs 2 im Wärmeleitungsrohr 1 eine Dicke von 100 mm und Durchmesser zwischen 15 und 70 mm. Bevorzugt liegen die Durchmesser bei 15, 18, 22, 35, 42, 54 und 70 mm.

Das Kupferrohr 2 weist freie Rohrabschnitte 8, 9 auf, die eine Länge von 200 mm haben und auf denen bekannte Anschlußverbindungen montierbar sind, um weitere Wärmeleitungsrohre wasserdicht anzuschließen. Die Anschlußverbindungen sind dabei für den Anschluß an Rohrinstallationen in Gebäuden und Schächten sowie zur Herstellung von Durchgangs- und T-Verbindungen geeignet.

Fig. 2 zeigt eine teilweise geschnittene Vorderansicht des erfindungsgemäßen Wärmeleitungsrohrs 1 mit einer der beiden Stirnflächen 6 des Wärmeleitungsrohrs 1 und mit dem Kupferrohr 2, welches von den aus Polyurethanschaum gebildeten Eingen 5 wasserdicht umschlossen sind, die, wie ausgeführt, das Wärmeleitungsrohr 1 seitlich gegen angreifende Medien abdichtet. Der Schutzanstrich 7 erstreckt sich über die gesamte Strinfläche 6 und ist gegenüber angreifenden Medien sehr korrosionsbeständig und dementsprechend haltbar.

**Patentansprüche**

1. Wärmeleitungsrohr mit einem Rohr aus weichgeglühtem Kupfer, das von einer alterungsbeständigen und wasserabweisenden Isolierung umgeben ist; einem gewellten, flexiblen Außenmantel, der aus korrosionsbeständigem Polyethylen hoher Dichte besteht; mit die Isolierung trocken haltenden und wasserdichten Wärmeleitungsrohr-Sektoren bildenden Einrichtungen, die zwischen dem Kupferrohr und dem Außenmantel beidseitig angebracht sind, und mit Endzentrierscheiben, die das Wärmeleitungsrohr zentral in Position halten, dadurch gekennzeichnet, daß die das Kupferrohr (2) umgebende Isolierung aus geschliffenen und eingepaßten Basaltfasern (4) besteht, die vom gewellten, flexiblen Außenmantel (3) aus Polyethylen hoher Dichte umgeben sind, und daß die Einrichtungen, die zwischen dem Kupferrohr (2) und dem Außenmantel (3) beidseitig angebracht sind, wie auch die Endzentrierscheiben, aus durch Polyurethan einschäumbaren Ringen (5) bestehen, die das Wärmeleitungsrohr (1) seitlich gegen angreifende Medien abdichten und zentral in Position halten, wobei Stirnflächen (6) der Ringe (5) einen Spezialanstrich (7) gegen Feuchtigkeit aufweisen.

2. Wärmeleitungsrohr nach Anspruch 1, dadurch gekennzeichnet, daß die Ringe (5) zum Abdichten gegen angreifende Medien und Zentrieren des Kupferrohres (2) im Wärmeleitungsrohr (1) eine Dicke von etwa 100 mm haben.

3. Wärmeleitungsrohr nach Anspruch 1, dadurch gekennzeichnet, daß das Kupferrohr (2) eine Gesamtlänge von 5 bis 10 m und Durchmesser zwischen 15 und 70 mm hat.

4. Wärmeleitungsrohr nach Anspruch 3, dadurch gekennzeichnet, daß das Kupferrohr (2) bevorzugt Durchmesser von 15, 18, 22, 28, 35, 42, 54 und 70 mm hat.

5. Wärmeleitungsrohr nach Anspruch 1, dadurch gekennzeichnet, daß das Kupferrohr (2) freie Abschnitte (8, 9) aufweist, die eine Länge von 200 mm haben und auf denen bekannte Anschlußverbindungen montierbar sind, um weitere Wärmeleitungsrohre (1) wasserdicht anzuschließen.

0294310

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 330 966  (C. GOTTWALD)<br>* Insgesamt *<br>--- | 1 | F 16 L  59/14<br>F 16 L  59/12 |
| A | CH-A- 215 731  (R. BAUMANN)<br>* Seite 1, Zeile 43 - Seite 2, Zeile 3 *<br>--- | 1 | |
| A | DE-A- 835 240  (W. REITH)<br>* Anspruch 10; Figuren *<br>--- | 1 | |
| A | EP-A-0 162 760  (COFLEXIP)<br>* Seite 4, Zeilen 23-28; Figuren 1,4 *<br>----- | 1 | |

RECHERCHIERTE
SACHGEBIETE (Int. Cl.4)

F 16 L

Der vorliegende Recherchenbericht wurde für alle Patentansprüche erstellt

| Recherchenort | Abschlußdatum der Recherche | Prüfer |
|---|---|---|
| DEN HAAG | 01-08-1988 | BARTSCH A.W. |